# EUROPEAN PATENT SPECIFICATION

(11) **EP 1 461 225 B1**
(45) Date of publication and mention of the grant of the patent: **28.11.2007**
(21) Application number: 02788403.0
(22) Date of filing: 18.12.2002
(51) Int. Cl.: B60N 2/24, B60N 2/01, B60N 2/30

(54) **MOTOR VEHICLE SEAT, WITH A KNEE-REST ELEMENT**
KRAFTFAHRZEUGSITZ MIT EINER KNIESTÜTZE
SIEGE POUR VEHICULE A MOTEUR COMPORTANT UN ELEMENT AGENOUILLOIR

(30) Priority: 04.01.2002 IT TO20020011
(43) Date of publication of application: 29.09.2004
(73) Proprietor: C.R.F. SOCIETA' CONSORTILE PER AZIONI, 10043 Orbassano (Torino) (IT)
(72) Inventor: GILARDI, Marco, C.R.F. Soc. Consortile per Azioni, I-10043 Orbassano (IT); DEMONTIS, Salvatore, I-10100 Torino (IT); MOTETTI, Paola, C.R.F. Soc. Consortile per Azioni, I-10043 Orbassano (IT)
(74) Representative: Notaro, Giancarlo
(86) International application number: PCT/IB2002/005549
(87) International publication number: WO 2003/055716

(56) References cited:
- WO-A-87/01568
- WO-A-99/54188
- US-A- 1 649 608
- US-A- 4 526 422

## Description

The present invention refers to **a** motor vehicle of the type indicated in the preamble of claim 1. A motor-vehicle of this type is known from WO 8701568.

The object of the invention is that of realizing a seat, which can be used as the back seat of a car for example, that permits easy configuration of the passenger compartment of the motor vehicle in terms of the number of seats and type of seating, optimally exploiting the passenger compartment space, especially for transporting luggage, improving visibility for back-seat passengers (in the case of rear seats) and lastly, but not least, providing an ergonomic sitting position.

In order to achieve these and other objectives, the subject of the invention is a a motor-vehicle as set forth in claim 1.

In a preferred embodiment, the three elements of the seat, or rather the seating element, the backrest element and the knee-rest element, are completely separate from each other. In addition, one or more of said seating and backrest elements are preferably connected to the structure of the motor vehicle in a manner such that they can move between an extracted position of use and a retracted position of reduced space occupation, in which the resulting space inside the passenger compartment becomes available, for example, for transporting luggage.

It is possible to provide a bench rear seat, or two separate rear seats, each of which exhibits the above-described characteristics.

In the preferred embodiment, which refers to the application of a rear seat in a car for city use, the architecture of the seat results in a raised position for its occupant with respect to the occupant of the front seat of the motor vehicle, thereby permitting a better view for occupants of the rear seat.

Always in the case of the aforesaid preferred form of embodiment, the connection of each of the three elements of the seat to the structure of the motor vehicle, or possibly to a mobile part thereof, is an articulated connection, for which each element can oscillate between its position of utilization and its position of reduced space occupation. In a variant, the seat cushion and the seatback can be closed like a book and retracted into a stowed-away position below a hatch in the floorpan.

Further characteristics and advantages of the invention will become clear from the description that follows, with reference to the enclosed drawings, supplied purely by way of a non-limitative example, where:
- Figure 1 is a schematic prospective view of a possible form of embodiment of a motor vehicle in accordance with the invention,
- Figures 2 and 3 illustrate a schematic side view of the motor vehicle in Figure 1, with the rear seat respectively in the state of utilization and in the state of reduced space occupation, and
- Figures **4-7** illustrate the various phases of the seat stowage procedure in the case of a second form of embodiment.

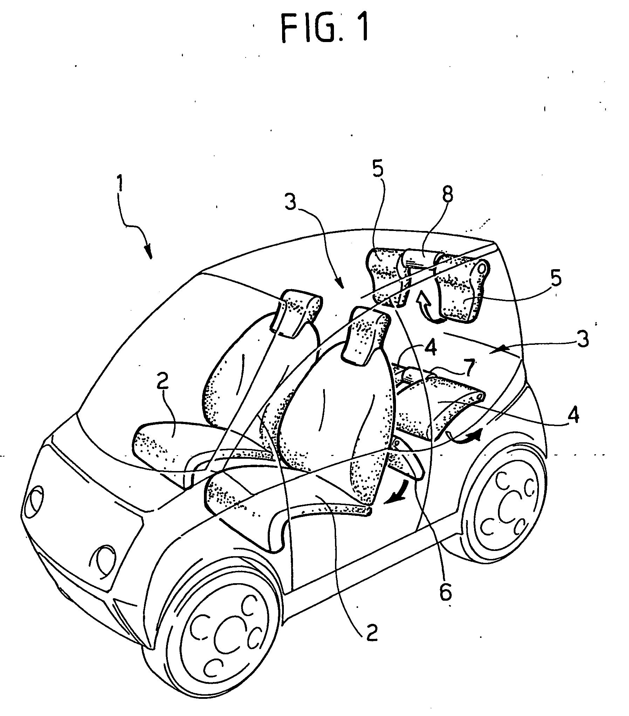

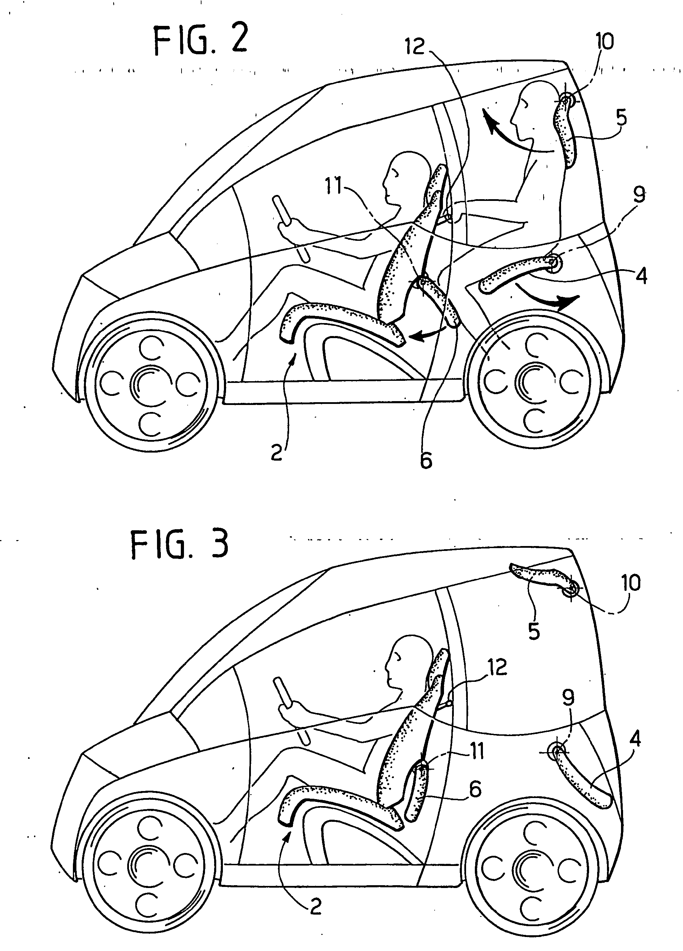

In the drawings, reference number 1 indicate a motor car, including two front seats 2 and two separate rear seats, each of which is indicated as a whole by reference number 3. As can be seen in the illustrated example, each of the two rear seats 3 is in reality constituted by three elements completely separate from each other, specifically by a seating element 4, a backrest element 5 and a knee-rest element 6. Each of said three elements 4, 5 and 6 is mounted in an articulated manner on the respective support structure to move between an extracted state of utilization (illustrated in Figures 1 and 2) and a retracted state of reduced space occupation (illustrated in Figure 3). The seating 4 and backrest 5 elements are supported in a articulated manner by supports. 7 and 8 anchored to the structure of the motor vehicle, while the knee-rest elements 6 are connected in an articulated manner to the structure of the seats in front of them 2. The respective axes of articulation are indicated as 9, 10 and 11 in Figures 2 and 3.

The drawings do not show the structure and shape of the supports of the elements 4, 5 and 6, in detail as they can be realized in any known manner. Neither are the means of blocking the elements 4, 5 and 6 in the respective states of utilization and reduced space occupation illustrated. It is also possible to provide elastic means (not illustrated) associated with one or mode of these elements, which draw said elements towards one of their two end positions.

As is clearly visible in Figure 2, in the-state of utilization, the elements 6 act as rests for the front part of the legs in the knee zone. The seating element 4 is in a raised position with respect to the knee-rest element 6 and is at least slightly inclined downwards at the front, to aid the said resting. The backrest element 5 is situated, when set in its state of utilization, in the most correct position for supporting the occupant's back in an ergonomic posture that the occupant is obliged to assume due to the arrangement of the elements 4 and 6. As is visible in Figures 2 and 3, a handle 12 can be associated with the seat in front 2, which the occupant of the rear seat can hold for greater stability when the motor vehicle is being driven.

As is also clearly visible in Figure 2, in the state of utilization, the seating element 4 of the rear seat is raised with respect to the seating element of the front seat 2, for which the occupant of the rear seat has an unobstructed front view that is not blocked by the top of the front seat and/or the head of its occupant.

In the state of reduced space occupation illustrated in Figure 3, the extra space in the passenger compartment can be used as a luggage compartment.

From the above, it is clearly evident that the seat in accordance with the invention permits many advantages to be achieved, both from the point of view of the ergonomics of the posture that the occupant is obliged to adopt and from point of view of easily reconfiguring the passenger compartment in terms of the number of seats and type of seating, with regards to both the exploitation of the space inside the passenger compartment and the visibility of the rear seat occupants.

Obviously, the invention is also applicable, in theory, to a front seat and also to types of motor vehicles other than that illustrated herein purely by way of example.

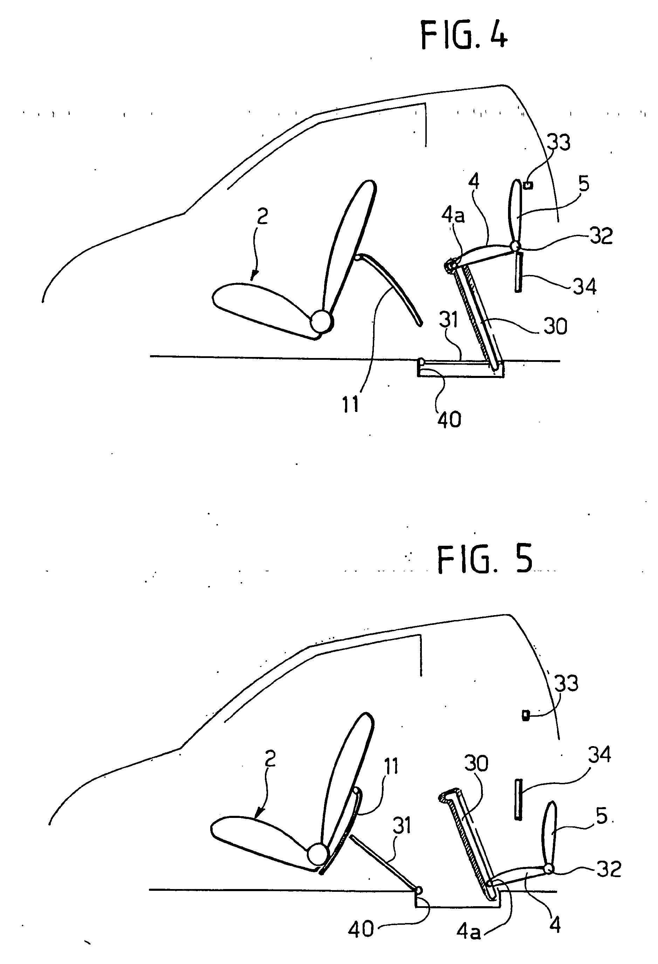

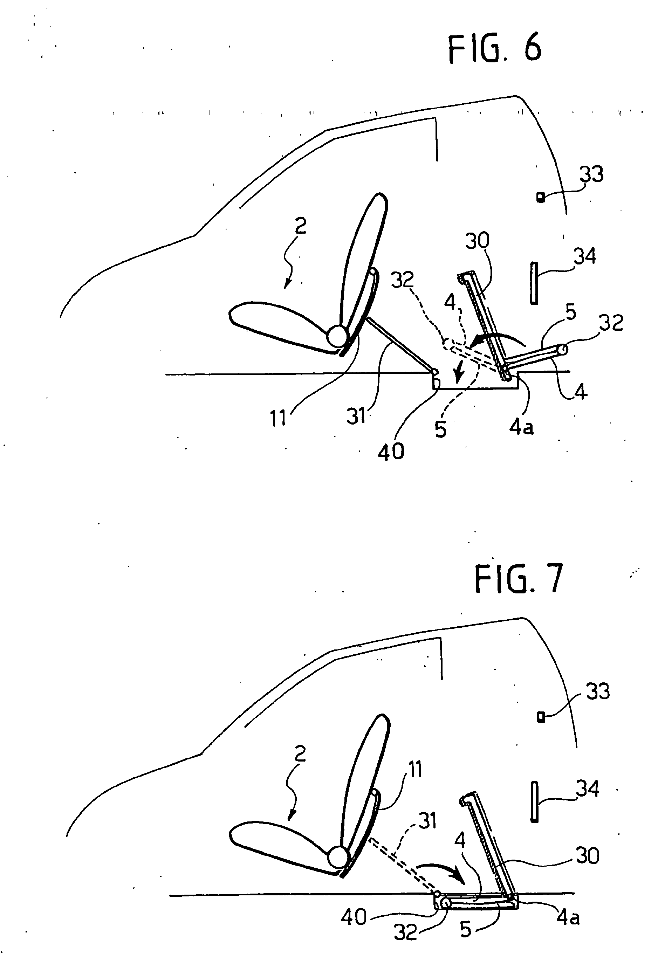

Figures 4-7 illustrate a second form of embodiment, in which the seat cushion 4 and backrest 5 are hinged to each other like a book 32. In the state of utilization (Figure 4), these elements are connected and blocked on two sides to supports 33 and 34, via any known type of linkage. The front of the cushion 4 has two side pins 4a mounted inside two lateral guide channels 30 carried on the chassis. Starting from the position in Figure 4, the catches on the supports 33 and 34 can be unblocked to allow the side pins 4a to slide in the guide 30 up to the position in Figure 5. In this state, the backrest 5 can be closed on top of the cushion 4 (Figure 6) and the thus combined cushion 4 and backrest 5 group can be rotated around the pins 4a (dashed-line position in Figure 6) and stowed away in a compartment 40 under the floorpan (Figure 7) after having lifted a hatch 31.

In addition, the principle of the invention being understood, the constructional details and forms of embodiment could be extensively changed with respect to that described and illustrated by way of example without leaving the scope of this invention as recited in the appended claims.

## Claims

1. A motor vehicle comprising a seat (3), wherein said seat includes a seating element (4), and a backrest element (5) mounted on the structure of the motor vehicle (1), and a knee-rest element (6), for resting the front part of the legs in the knee zone, and wherein the seating element (4) is inclined downwards at the front, such that when seated, the occupant's legs rest against said knee-rest element (6), wherein
said seat (3) is a rear seat of the motor-vehicle and said motor vehicle is a small-sized motor car for city use, **characterized in that** the seating element (4) of said rear seat (3) is in a raised position with respect to the seating element of the front seat (2) of the motor vehicle, wherein each of the three seating, backrest and knee-rest elements (4, 5 and 6) is mounted to the respective support structure in an articulated manner, such that it can oscillate between a position of use and a retracted position, wherein the knee-rest element (6) is articulated to the backrest of a front seat (2) of the motor-vehicle located in front of said rear seat (2).

2. A motor-vehicle according to claim 1, **characterized in that** said seating (4) and backrest (5) elements are completely separate from the knee-rest element (6).

3. A motor-vehicle according to claim 2, **characterized in that** one or more of said seating and backrest elements (4,5) is connected to the structure of the motor vehicle such that it can be moved between an extracted position of utilization and a retracted position of reduced space occupation.

4. A motor vehicle according to claim 1, **characterized in that** the motor vehicle is equipped with two mutually separate rear seats (3), each of which is in accordance with any of claims 1-3.

5. A motor vehicle according to claim 1, **characterized in that** said rear seat is a bench seat.

6. A motor vehicle according to claim 1, **characterized in that** said rear seat (3) has retracted state of reduced space occupation , so that the zone that it occupies in the passenger compartment of the motor vehicle can be used as a luggage compartment.

7. A motor vehicle according to claim 1, **characterized in that** the seating element (4) and the backrest (5) element of said rear seat can be closed like a book and stowed away beneath a hatch (31) in a recess (40) of the floorpan.

8. A motor vehicle according to claim 11, **characterized in that** the front of the seating element (4) of said rear seat (3) has two side pins (4a) mounted to slide inside lateral guide channels on the chassis between a raised position of utilization and a lowered position for stowage.

## Patentansprüche

1. Kraftfahrzeug, umfassend einen Sitz (3), wobei der Sitz einschließt ein Sitzelement (4) und ein Rückenstützelement (5), welches auf der Struktur des Kraftfahrzeugs (1) befestigt ist, und ein Kniestützelement (6) zum Stützen des vorderen Teils der Beine in dem Kniebereich, und wobei das Sitzelement (4) an der Vorderseite abwärts geneigt ist, so dass die Beine des Benutzers, wenn dieser sitzt, sich gegen das Kniestützelement (6) stützen, wobei der Sitz (3) ein Rücksitz des Kraftfahrzeugs ist und das Kraftfahrzeug ein kleines Auto zum Stadtgebrauch ist, **dadurch gekennzeichnet, dass** das Sitzelement (4) des Rücksitzes (3) in einer erhobenen Position in Bezug zu dem Sitzelement des Vordersitzes (2) des Kraftfahrzeugs ist, wobei jeder der drei Sitze, Rückenstütze und Kniestützelemente (4, 5 und 6) an der jeweiligen Unterstützungsstruktur befestigt ist in einer beweglichen Art, so dass sie zwischen einer Betriebsposition und einer eingezogenen Position oszillieren können, wobei das Kniestützelement (6) beweglich ist an der Rückenstütze eines Vordersitzes (2) des Kraftfahrzeugs, der sich im Vorderteil des Rücksitzes (2) befindet.

2. Kraftfahrzeug nach Anspruch 1, **dadurch gekennzeichnet, dass** die Sitz-(4)- und Rückenlehne-(5)-Elemente vollständig von dem Kniestützelement (6) getrennt sind.

3. Kraftfahrzeug nach Anspruch 2, **dadurch gekennzeichnet, dass** eines oder mehrere der Sitz- und Rückenstützelemente (4, 5) mit der Struktur des Kraftfahrzeugs verbunden sind, so dass es zwischen einer ausgezogenen Betriebsposition und einer zurückgezogenen Position mit reduziertem Raumbedarf bewegt werden kann.

4. Kraftfahrzeug nach Anspruch 1, **dadurch gekennzeichnet, dass** das Kraftfahrzeug ausgestattet ist mit zwei voneinander unabhängigen Rücksitzen (3), von denen jeder in Übereinstimmung mit irgendeinem der Ansprüche 1 bis 3 ist.

5. Kraftfahrzeug nach Anspruch 1, **dadurch gekennzeichnet, dass** der Rücksitz eine Rückbank ist.

6. Kraftfahrzeug nach Anspruch 1, **dadurch gekennzeichnet, dass** der Rücksitz (3) einen zurückgezogenen Zustand mit reduziertem Raumbedarf hat, so dass der Bereich, den er in dem Passagierteil des Kraftfahrzeugs verbraucht, als ein Gepäckraum verwendet werden kann.

7. Kraftfahrzeug nach Anspruch 1, **dadurch gekennzeichnet, dass** das Sitzelement (4) und das Rückenstütz-(5)-Element des Rücksitzes wie ein Buch geschlossen werden kann und unterhalb einer Klappe (31) in einer Aussparung (40) des Fahrzeugbodens verstaut werden kann.

8. Kraftfahrzeug nach Anspruch 11, **dadurch gekennzeichnet, dass** die Vorderseite des Sitzelements (4) des Rücksitzes (3) zwei Seitenstifte (4a) hat, die befestigt sind, um innerhalb lateraler Führungskanäle auf dem Fahrgestell zu rutschen zwischen einer erhobenen Betriebsposition und einer unteren Verstauposition.

## Revendications

1. Un véhicule automobile comprenant un siège (3), ledit siège incluant un élément d'assise (4), et un élément de dossier (5) monté sur la structure du véhicule automobile (1), et un élément repose-genoux (6), pour reposer la partie frontale des jambes dans la région des genoux, et l'élément d'assise (4) étant incliné vers le bas à l'avant, de sorte qu'en position assise les jambes de l'occupant reposent contre ledit élément repose-genoux (6), ledit siège (3) étant un siège arrière du véhicule automobile,
et **caractérisé en ce que** l'élément d'assise (4) dudit siège arrière (3) est en position surélevée par rapport à l'élément d'assise du siège avant (2) du véhicule automobile, chacun des trois éléments d'assise, de dossier et repose-genoux (4, 5 et 6) étant monté sur la structure support respective de manière articulée, de manière à pouvoir osciller entre une position d'utilisation et une position rétractée, l'élément repose-genoux (6) étant articulé sur le dossier d'un siège avant (2) du véhicule automobile situé devant ledit siège arrière (2).

2. Un véhicule automobile selon la revendication 1, **caractérisé en ce que** lesdits éléments d'assise (4) et de dossier (5) sont complètement séparés de l'élément repose-genoux (6).

3. Un véhicule automobile selon la revendication 2, **caractérisé en ce que** l'un au moins desdits éléments d'assise et de dossier (4, 5) est relié à la structure du véhicule automobile de manière à pouvoir être déplacé entre une position extraite d'utilisation et une position rétractée d'occupation réduite de l'espace.

4. Un véhicule automobile selon la revendication 1, **caractérisé en ce que** le véhicule automobile est équipé de deux sièges arrière mutuellement séparés (3), dont chacun d'entre eux est selon l'une des revendications 1 à 3.

5. Un véhicule automobile selon la revendication 1, **caractérisé en ce que** ledit siège arrière est un siège banquette.

6. Un véhicule automobile selon la revendication 1, **caractérisé en ce que** ledit siège arrière (3) possède un état rétracté d'occupation réduite de l'espace, de sorte que la zone qu'il occupe dans l'habitacle du véhicule automobile puisse être utilisé comme coffre à bagages.

7. Un véhicule automobile selon la revendication 1, **caractérisé en ce que** l'élément d'assise (4) et l'élément de dossier (5) dudit siège arrière peuvent être refermés comme un livre et rangés au-dessous d'une trappe (31) dans un logement (40) du plancher.

8. Un véhicule automobile selon la revendication 1, **caractérisé en ce que** l'avant de l'élément d'assise (4) dudit siège arrière (3) possède deux doigts latéraux (4a) montés à coulissement à l'intérieur de gorges latérales de guidage sur le châssis entre une position relevée d'utilisation et une position abaissée pour le rangement.
